# EUROPÄISCHE PATENTSCHRIFT

(11) **EP 1 808 968 B1**
(45) Veröffentlichungstag und Bekanntmachung des Hinweises auf die Patenterteilung: **04.03.2009**
(21) Anmeldenummer: 07000292.8
(22) Anmeldetag: 09.01.2007
(51) Int. Cl.: H04B 5/00, G06K 19/07

(54) **Verfahren zum Betrieb eines Transponders und Transponder**
Operating method of a transponder and transponder
Procédé de fonctionnement d'un transpondeur et transpondeur

(30) Priorität: 16.01.2006 DE 102006002515
(43) Veröffentlichungstag der Anmeldung: 18.07.2007
(73) Patentinhaber: ATMEL Germany GmbH, 74072 Heilbronn (DE)
(72) Erfinder: Fischer, Martin, 74629 Pfedelbach (DE); Friedrich, Ulrich, 74248 Ellhofen (DE); Masuch, Jens, 74081 Heilbronn (DE); Pangels, Michael, 71642 Ludwigsburg (DE); Ziebertz, Dirk, 74246 Eberstadt (DE)
(74) Vertreter: Müller, Wolf-Christian

(56) Entgegenhaltungen:
- WO-A-20/05109328
- US-A1- 2003 116 634
- US-B1- 6 323 566

## Beschreibung

Die Erfindung betrifft ein Verfahren zum Betrieb eines Transponders nach dem Oberbegriff des Anspruchs 1 und einen Transponder nach dem Oberbegriff des Anspruchs 7.

Kontaktlose Identifikationssysteme oder so genannte Radio-Frequency-Identification(RFID)-Systeme bestehen üblicherweise aus einer Basisstation bzw. einem Lesegerät oder einer Leseeinheit und einer Vielzahl von Transpondern oder Remote-Sensoren. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung zwischen dem Transponder und der Basisstation weist der Transponder eine Schnittstelle eines bestimmten Schnittstellentyps auf, der kompatibel zum entsprechenden Schnittstellentyp der Basisstation ist. Die Schnittstellentypen können in einer ersten groben Gliederung in kontaktbehaftete und kontaktlose Typen eingeteilt werden.

Die Schnittstellentypen, bei denen die Datenübertragung kontakt- bzw. berührungslos erfolgt, unterscheiden sich unter anderem durch die zur Datenübertragung verwendete Arbeits- bzw. Trägerfrequenz, d.h. die durch die Basisstation gesendete Frequenz. Häufig verwendete Frequenzen sind beispielsweise 125 kHz (LF-Bereich), 13,56 MHz (RF-Bereich), ein Frequenzbereich zwischen 860 MHz bis 960 MHz (UHF-Bereich) und ein Frequenzbereich größer als 3GHz (Mikrowellenbereich).

Ein weiteres Unterscheidungsmerkmal unterschiedlicher Schnittstellentypen ist die Art der Kopplung zwischen den jeweiligen Schnittstellen des Transponders und der Basisstation. Hierbei wird unter anderem zwischen der so genannten induktiven oder magnetischen Kopplung und der so genannten Fernfeldkopplung unterschieden. Vereinfacht dargestellt, bilden bei der induktiven oder Nahfeldkopplung eine Antennenspule der Basisstation und eine Antennenspule des Transponders einen Transformator, weshalb diese Kopplungsart auch als transformatorische Kopplung bezeichnet wird. Bei der induktiven Kopplung ist eine maximale Entfernung zwischen dem Transponder und der Basisstation auf den Bereich eines Nahfeldes der verwendeten Antennen beschränkt. Der Nahfeldbereich wird im wesentlichen durch die Arbeitsfrequenz der Schnittstelle festgelegt.

Die Fernfeldkopplung beruht auf der Ausbreitung von elektromagnetischen Wellen, die sich von der verwendeten Antenne ablösen. UHF-oder Mikrowellensysterne beruhen üblicherweise auf einer Fernfeldkopplung. RF- oder HF-Systeme beruhen demgegenüber üblicherweise auf einer induktiven Kopplung. Diesbezüglichen Grundlagen sind beispielsweise in dem Lehrbuch Klaus Finkenzeller, RFID-Handbuch, 3. Aufl., HANSER, 2002 , Kapitel 2.3 "Frequenz, Reichweite Kopplung", Kapitel 3.2.1 "induktive Kopplung" und Kapitel 4.2.1.1 "Übergang vom Nah- zum Fernfeld bei Leiterschleifen" beschrieben.

Zur Datenübertragung von einem Transponder zur Basisstation bei der induktiven Kopplung wird in der Regel die so genannte Lastmodulation verwendet, siehe hierzu beispielsweise Finkenzeller, Kapitel 3.2.1.2.1 "Lastmodulation".

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulätion, bei der die Frequenz oder die Phasenlage eines Unterträgers geändert wird, siehe hierzu wiederum Finkenzeller, Kapitel 3.2.2 "elektromagnetische Backscatter-Kopplung".

Die Datenübertragung im UHF-Bereich mit elektromagnetischer Fernfeldkopplung ist jedoch nicht in allen Ländern möglich, da die dortigen Regularien beispielsweise keine freien Frequenzen in den erforderlichen Frequenzbändern zur Verfügung stellen. Dies hat zur Folge, dass derartige Transponder nicht weltweit verwendbar sind.

Weiterhin kann aufgrund von Störstrahlung oder durch das Vorhandensein von absorbierenden Materialien, beispielsweise Wasser, die Datenübertragung in bestimmten Frequenzbereichen, insbesondere im UHF- oder Mikrowellenbereich, derart gestört sein, dass ein Betrieb des Transponders unmöglich wird.

In der WO 2005/109328 A1 ist ein Transponder für so genannte remotekeyless-Anwendungen beschrieben, der über eine aktive, unidirektionale Schnittstelle für den UHF-Frequenzbereich und mehrere bidirektionale Schnittstellen für den LF-Frequenzbereich aufweist. Der UHF-Schnittstelle und den jeweiligen LF-Schnittstellen sind jedoch spezifischen Funktionen zugeordnet, so dass ein wahlfreier Betrieb der unterschiedlichen Schnittstellen nicht möglich ist.

In der US 6,323,566 B1 und der WO 2005/109328 A1 sind jeweils Transponder offenbart, die zwei bidirektionale Schnittstellen unterschiedlichen Typs aufweisen, wobei eine Schnittstelle auf einer HF-Kopplung und die andere Schnittstelle auf einer LF-Kopplung basiert.

IN der US 2003/0116634 A1 ist eine kontaktlose IC-Karte offenbart, bei der eine entfernungsabhängige Umschaltung zwischen unterschiedlichen Betriebsarten erfolgt.

Die Erfindung liegt die Aufgabe zugrunde, ein Verfahren zum Betrieb eines Transponders und einen Transponder zur Verfügung zu stellen, die einen zuverlässigen Betrieb des Transponders ermöglichen.

Die Erfindung löst diese Aufgabe durch ein Verfahren zum Betrieb eines Transponders nach Anspruch 1 und einen Transponder nach Anspruch 7.

Bevorzugte Ausführungsformen sind Gegenstand der Unteransprüche.

Bei dem erfindungsgemäßen Verfahren zum Betrieb eines Transponders, werden Daten zwischen dem Transponder und einer Basisstation drahtlos bidirektional über eine erste Schnittstelle übertragen, die auf einer elektromagnetischen Fernfeldkopplung basiert. Zusätzlich werden Daten zwischen dem Transponder und der Basisstation drahtlos bidirektional über eine zweite Schnittstelle übertragen, die auf einer induktiven Kopplung basiert. Die Basisstation führt eine Antikollisionsroutine über die erste Schnittstelle durch. Wenn der Transponder ausgewählt wird, wird die erste Schnittstelle deaktiviert und eine Datenübertragung wird nachfoldend ausschließlich über die zweite Schnittstelle durchgeführt, Bei der Antikollisionsroutine kann es sich beispielsweise um eine deterministisches Auswahlverfahren, wie ein Baumsuchverfahren, oder um eine stochastisches Verfahren, wie ein ALOHA-Auswahlverfahren handeln.

In einer Weiterbildung des Verfahrens werden sicherheitsrelevante Daten ausschließlich über die zweite Schnittstelle übertragen. Bei der auf der elektromagnetischen Fernfeldkopplung basierenden Datenübertragung im UHF- oder im Mikrowellenfrequenzbereich werden hohe Übertragungsreichweiten erzielt, wodurch es im Vergleich zu nahfeldgekoppelten Systemen vergleichsweise einfach ist, die zwischen dem Transponder und der Basisstation übertragenen Daten unbefugt abzuhören. Besonders einfach ist dies bei den von der Basisstation übertragenen Daten möglich, da diese mit einer vergleichsweise hohen Sendeleistung gesendet werden. Da ein Abhören der auf induktiver Kopplung basierenden Datenübertragung nur in geringer Entfernung zur Basisstation möglich ist, wird die Abhörsicherheit dadurch wesentlich erhöht.

In einer Weiterbildung des Verfahrens wird eine Authentifizierungsoperation ausschließlich über die zweite Schnittstelle durchgeführt. Eine Authentifizierungsoperation dient beispielsweise zur Freigabe des schreibenden und/oder lesenden Zugriffs auf den Transponder bzw. dessen Speicher. Üblicherweise wird hierzu ein Passwort von der Basisstation an den Transponder übertragen, wobei das Passwort beispielsweise mit einer zuvor durch den Transponder übertragenen Zufallszahl XOR-Verknüpft werden kann. Die Authentifizierungsoperation wird auch als Access-Operation bezeichnet. Ein Beispiel einer Authentifizierungs- oder Accessoperation ist in dem Normungsvorschlag ISO/IEC_CD 18000-6C vom 07.01.2005 unter 6.3.2.10.3.6 beschrieben. Erfindungsgemäß werden Passwörter und/oder zur XOR-Verknüpfung verwendete Zufallszahlen ausschließlich über die zweite Schnittstelle übertragen, wenn sie im Klartext übertragen werden. In einer Weiterbildung des Verfahrens wird ein Data Encryption Standard (DES) Verschlüsselungsverfahren, ein Triple-DES Verschlüsselungsverfahren oder ein Advanced Encryption Standard (AES) Verschlüsselungsverfahren bei der Datenübertragung über die zweite Schnittstelle durchgerührt. Derartige rechenintensive Verschlüsselungsverfahren benötigen zu ihrer Ausführung vergleichsweise viel Betriebsleistung. Bei passiven Transpondern mit UHF- oder MikrowellenFernfeldkopplung reicht die von dem elektromagnetischen Feld der Basisstation bereitgestellte Leistung unter den üblichen Betriebsbedingungen nicht aus, um die für die Verschlüsselungsalgorithmen erforderliche Leistung zur Verfügung zu stellen.

In einer Weiterbildung des Verfahrens wird der Transponder ausschließlich über die erste Schnittstelle und/oder über die zweite Schnittstelle mit Betriebsenergie versorgt, d.h. der Transponder ist passiv.

In einer Weiterbildung des Verfahrens werden während der Antikollisonsroutine Daten von dem Transponder zur Basisstation über die erste Schnittstelle rückstreubasiert übertragen.

In einer Weiterbildung des Verfahrens wird die erste Schnittstelle in einem Frequenzbereich von 400 MHz bis 6 GHz betrieben. Bevorzugt liegt die Frequenz im UHF-Bereich bei 860 MHz bis 960 MHz.

In einer Weiterbildung des Verfahrens wird die zweite Schnittstelle in einem Frequenzbereich von 100 kHz bis 150 KHz oder 10 MHz bis 20 MHz betrieben.

Der erfindungsgemäße Transponder umfasst eine erste Schnittstelle zur bidirektionalen drahtlosen Datenübertragung zwischen dem Transponder und einer Basisstation, wobei die erste Schnittstelle auf einer elektromagnetischen Fernfeldkopplung basiert. Weiterhin umfasst er eine zweite Schnittstelle zur bidirektionalen drahtlosen Datenübertragung zwischen dem Transponder und der Basisstation, wobei die zweite Schnittstelle auf einer induktiven Kopplung basiert.

Die Erfindung wird nachfolgend unter Bezugnahme auf die Zeichnungen beschrieben. Hierbei zeigen schematisch:
- Fig. 1: ein RFID-System mit einer Basisstation und einem Transponder und
- Fig. 2: ein Zeitablaufsdiagramm eines Auswahlverfahrens.

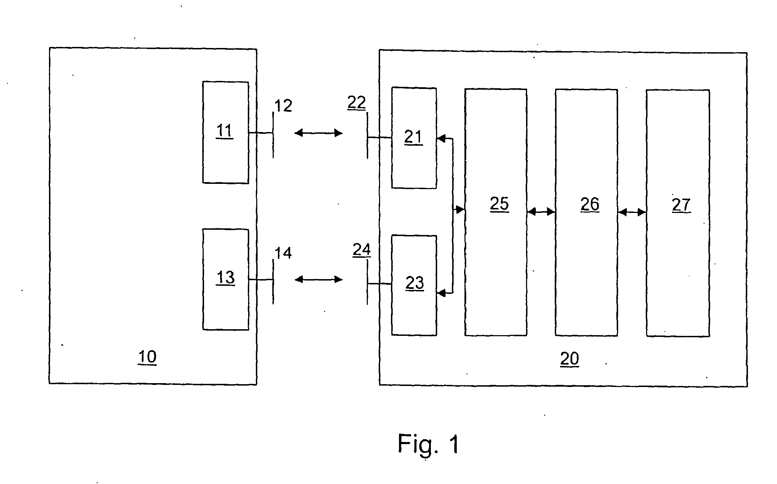

Fig. 1 zeigt ein RFID-System mit einer Basisstation 10 und einem Transponder 20.

Die Basisstation 10 umfasst eine erste Schnittstelle in Form eines analogen Front-Ends 11 und einer mit dem analogen Front-End 11 gekoppelten Antenne 12. Die erste Schnittstelle arbeitet über eine Fernfeldkopplung in einem Frequenzbereich von 860 MHz bis 960 MHz. Die Basisstation 10 umfasst zusätzlich eine zweite Schnittstelle in Form eines weiteren analogen Front-Ends 13 und einer mit dem analogen Front-End 13 gekoppelten Antenne 14. Die zweite Schnittstelle arbeitet über eine induktive Kopplung in einem Frequenzbereich von 13,56 MHz.

Der Transponder 20 umfasst eine erste Schnittstelle in Form eines analogen Front-Ends 21 und einer mit dem analogen Front-End 21 gekoppelten Antenne 22. Die erste Schnittstelle arbeitet über eine Fernfeldkopplung in einem Frequenzbereich von 860 MHz bis 960 MHz. Eine Datenübertragung zwischen der Basisstation 10 und dem Transponder 20 über deren jeweils erste Schnittstelle erfolgt über ein Datenübertragungsprotokoll in Übereinstimmung mit dem Normungsvorschlag ISO/IEC_CD 18000-6C vom 07.01.2005. Der Transponder 20 umfasst zusätzlich eine zweite Schnittstelle in Form eines weiteren analogen Front-Ends 23 und einer mit dem analogen Front-End 23 gekoppelten Antenne 24. Die zweite Schnittstelle arbeitet über eine induktive Kopplung in einem Frequenzbereich von 13,56 MHz. Eine Datenübertragung zwischen der Basisstation 10 und dem Transponder 20 über deren jeweils zweite Schnittstelle erfolgt gemäß der Norm ISO 14443.

Die Datenübertragung vom Transponder 20 zur Basisstation 10 über die erste Schnittstelle 21 und 22 erfolgt rückstreubasiert. Die Datenübertragung vom Transponder 20 zur Basisstation 10 über die zweite Schnittstelle 23 und 24 erfolgt über eine Lastmodulation.

Die analogen Front-Ends 11, 13, 21 und 23 umfassen jeweils nicht gezeigte Schaltungsteile, die zur Ansteuerung der jeweiligen Antennen 12, 14, 22 bzw. 24 und zur Aufbereitung von Signalen dienen, die von den jeweiligen Antennen 12, 14, 22 bzw. 24 empfangen werden.

Der Transponder 20 umfasst weiterhin eine mit der ersten Schnittstelle . 21 und 22 und der zweiten Schnittstelle 23 und 24 gekoppelte Schnittstellenauswahleinheit 25, die derart ausgebildet ist, dass sie bei zu übertragenden, sicherheitsrelevanten Daten die zweite Schnittstelle 23 und 24 zur Datenübertragung auswählt. Weiterhin dient die Schnittstellenauswahleinheit 25 zur Verarbeitung der von der ersten Schnittstelle bzw. dem ersten analogen Front-End 21 und der zweiten Schnittstelle bzw. dem zweiten analogen Front-End 23 empfangenen und an diese zu übertragende Signale. Die Schnittstellenauswahleinheit 25 umfasst hierzu nicht gezeigte digitale Schaltkreise, wie beispielsweise Logik-Gatter, Zähler, Zeitgeber usw.

Die Schnittstellenauswahleinheit 25 ist mit einer Datenverarbeitungseinheit 26 gekoppelt, die beispielsweise als Zustandsmaschine oder als Mikroprozessor realisiert sein kann. Die Datenverarbeitungseinheit 26 dient zur Steuerung der Funktion des Transponders 20 und implementiert somit die Anwendungsschicht innerhalb des OSI-Schichtenmodells. Beispielsweise werden in der Datenverarbeitungseinheit 26 die von der Basisstation 10 übertragenen Kommandos verarbeitet.

Die Datenverarbeitungseinheit 26 ist mit einem elektrisch löschbaren Speicher 27 gekoppelt, der zum dynamischen Speichern transponderanwendungsbezogener Daten dient.

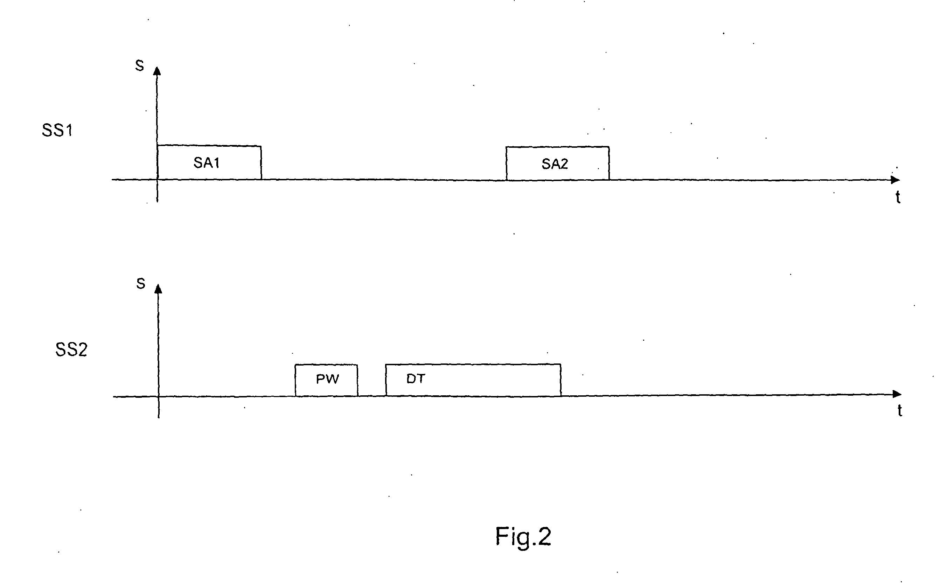

Fig. 2 zeigt schematisch ein Zeitablaufsdiagramm eines Auswahlverfahrens und eine anschließende Authentifizierung, wobei Signale SS1 an der ersten Schnittstelle 21 und 22 des Transponders 20 und Signale SS2 an der zweiten Schnittstelle 23 und 24 des Transponders 20 dargestellt sind.

Das Auswahlverfahren ist ein herkömmliches, slotbasiertes ALOHA-Verfahren. Dieses ist beispielsweise ausführlich in dem Normungsvorschlag ISO/IEC_CD 18000-6C vom 07.01.2005 unter 6.3.2 fortfolgende und insbesondere in der dortigen Figur 19 beschrieben. Zur Auswahl überträgt die Basisstation 10 zunächst in einem Zeitintervall bzw. ersten Slot SA1 ein so genanntes Query-Kommando an die erste Schnittstelle 21 und 22 des Transponders 20 im UHF-Frequenzbereich. Der Transponder 20 wechselt daraufhin einen Zustand seiner internen Zustandsmaschine in einen Zustand "Arbitrate". Im ersten Slot SA1 werden nun im Kontext des Auswahlverfahrens, wie im Normungsvorschlag in Figur 19 dargestellt, bidirektional Daten zwischen dem Transponder 20 und der Basisstation 10 über die erste Schnittstelle 21 und 22 übertragen, bis der Transponder 20 einen Zustand "Open" einnimmt.

Um bestimmte sicherheitsrelevante Operationen mit dem Transponder 20 auszuführen, muss die Basisstation 10 im Rahmen einer Authentifizierungsoperation ein Passwort PW an den Transponder 20 übertragen.

Wenn das Passwort PW korrekt übertragen wird, wechselt der Transponder 20 in einen Zustand "secure". Das Passwort PW wird jedoch nicht mehr über die erste UHF-Schnittstelle 21 und 22, sondern über die nahfeldgekoppelte, wesentlich abhörsicherere HF-Schnittstelle 23 und 24 übertragen. Der Transponder 20 deaktiviert nun seine erste Schnittstelle 21 und 22 und kommuniziert nachfolgend in einem Zeitintervall DT nur noch über die zweite Schnittstelle 23 und 24 mit der Basisstation 10.

Die Basisstation 10 kann nun in einem Zeitintervall SA2 in nachfolgenden Slots mit dem Auswahlverfahren bzw. dem Auswählen von weiteren, nicht gezeigten Transpondern über ihre erste Schnittstelle 11 und 12 fortfahren, während sie überlappend über ihre zweite Schnittstelle 13 und 14 mit dem Transponder 20 kommuniziert, d.h. beispielsweise einen Speicherbereich ausliest.

Es besteht die Möglichkeit, dass leistungsfähige Verschlüsselungsalgorithmen, wie beispielsweise ein DES Verschlüsselungsverfahren, ein Triple-DES Verschlüsselungsverfahren oder ein AES Verschlüsselungsverfahren, bei der Datenübertragung über die zweite Schnittstelle 23 und 24 durchgeführt werden. Auf diese Weise wird die Abhörgefahr nochmals drastisch reduziert.

Der Transponder 20 ist passiv, d.h. er wird ausschließlich über die erste Schnittstelle 21 und 22 und/oder über die zweite Schnittstelle 23 und 24 mit Betriebsenergie versorgt.

Bei geringeren Anforderungen an die Abhörsicherheit können die Schnittstellen des Transponders 20 auch gleichberechtigt betrieben werden, d.h. über beide Schnittstellen sind alle Funktionalitäten verfügbar, d.h. auch über die erste Schnittstelle 21 und 22 ist beispielsweise eine Authentifizierung möglich.

Die Schnittstellenauswahl kann hierbei nach unterschiedlichen Kriterien erfolgen. Beispielsweise ist es möglich, dass sowohl die erste als auch die zweite Schnittstelle nach einer Initialisierung des Transponders aktiviert werden. Wenn ein Kommando empfangen wird, bleibt jedoch nur diejenige Schnittstelle aktiviert, über die das Kommando empfangen wird.

Alternativ kann beispielsweise eine Feldstärkemessung an der ersten und an der zweiten Schnittstelle durchgeführt werden. Es wird dann diejenige Schnittstelle aktiviert, an der die größere Feldstärke ansteht, und die andere Schnittstelle wird deaktiviert. Auch die Einbeziehung einer Bitfehlerrate als Auswahlkriterium ist möglich.

Die Verwendung gleichberechtigter Schnittstellen ermöglicht einen weltweiten Betrieb des Transponders 20 auch in Ländern, insbesondere im asiatischen Raum, in denen keine UHF-Datenübertragung möglich ist.

Es versteht sich, dass zusätzlich zu den beiden gezeigten Schnittstellen 21 und 22 sowie 23 und 24 im Transponder 20 noch weitere Schnittstellen eines weiteren Typs vorgesehen sein können. Weiterhin ist es möglich, dass pro Schnittstellentyp eine getrennte Basiseinheit mit nur einer typzugehörigen Schnittstelle vorgesehen ist, d.h. dass der Transponder 20 mit Basisstationen betrieben wird, die nur einen der beiden Schnittstellentypen aufweisen.

## Patentansprüche

1. Verfahren zum Betrieb eines Transponders (20), bei dem Daten zwischen dem Transponder (20) und einer Basis station (10) drahtlos bidirektional über eine erste Schnittstelle (21, 22) übertragen werden, die auf einer elektromagnetischen Fernfeldkopplung basiert,
Daten zwischen dem Transponder (20) und der Basisstation (10) drahtlos bidirektional über mindestens eine zweite Schnittstelle (23, 24) übertragen werden, die auf einer induktiven Kopplung basiert.
**dadurch gekennzeichnet, dass**
die Basisstation (10) eine Antikollisionsroutine über die erste Schnittstelle (21, 22) durchführt und wenn der Transponder (20) ausgewählt wird, die erste Schnittstelle (21, 22) deaktiviert wird und eine Datenübertragung ausschließlich über die zweite Schnittstelle (23, 24) durchgeführt wird.

2. Verfahren nach einem der vorhergehenden Ansprüche, **dadurch gekennzeichnet, dass** ein DES Verschlüsselungsverfahren, ein Triple-DES Verschlüsselungsverfahren oder ein AES Verschlüsselungsverfahren bei der Datenübertragung über die zweite Schnittstelle (23, 24) durchgeführt wird.

3. Verfahren nach einem der vorhergehenden Ansprüche, **dadurch gekennzeichnet, dass** der Transponder (20) ausschließlich über die erste Schnittstelle (21, 22) und/oder über die zweite Schnittstelle (23, 24) mit Betriebsenergie versorgt wird.

4. Verfahren nach einem der vorhergehenden Ansprüche, **dadurch gekennzeichnet, dass** während der Antikollisionsroutine Daten von dem Transponder (20) zur Basisstation (10) über die erste Schnittstelle (21, 22) rückstreubasiert übertragen werden.

5. Verfahren nach einem der vorhergehenden Ansprüche, **dadurch gekennzeichnet, dass** die erste Schnittstelle (21, 22) in einem Frequenzbereich von 400 MHz bis 6 GHz betrieben wird.

6. Verfahren nach einem der vorhergehenden Ansprüche, **dadurch gekennzeichnet, dass** die zweite Schnittstelle (23, 24) in einem Frequenzbereich von 100 kHz bis 150 KHz oder 10 MHz bis 20 GHz betrieben wird.

7. Transponder, mit Mitteln, zur Durchführung der Schnitte des Verfahrens nach einem der Ansprüche 1 bis 6.

## Claims

1. Method operating a transponder (20) in which data are transmitted bidirectionally without wire between the transponder (20) and a base station (10) via a first interface (21, 22), which is based on an electromagnetic remote field coupling, and data are transmitted by bidirectionally and without wire between the transponder (20) and the base station (10) via at least one second interface (23, 24), which is based on an inductive coupling, **characterised in that** the base station (10) performs an anticollision routine by way of the first interface (21, 22) and when the transponder (20) is selected the first interface (21, 22) is deactivated and a data transmission is performed exclusively by way of the second interface (23, 24).

2. Method according to the preceding claim, **characterised in that** a DES coding method, a triple DES coding method or an AES coding method is performed in the data transmission by way of the second interface (23, 24).

3. Method according to one of the preceding claims, **characterised in that** the transponder (20) is supplied with operating energy exclusively by way of the first interface (21, 22) and/or by way of the second interface (23, 24).

4. Method according to any one of the preceding claims, **characterised in that** during the anticollision routine data are transmitted from the transponder (20) to the base station (10) on a backscatter basis by way of the first interface (21, 22).

5. Method according to any one of the preceding claims, **characterised in that** the the first interface (21, 22) is operated in a frequency range of 400 MHz to 6 GHz.

6. Method according to any one of the preceding claims, **characterised in that** the second interface (23, 24) is operated in a frequency range of 100 KHz to 150 KHz or 10 MHz to 20 MHz.

7. Transponder with means for performing the steps of the method according to any one of claims 1 to 6.

## Revendications

1. Procédé de fonctionnement d'un transpondeur (20) selon lequel :
des données sont transmises entre le transpondeur (20) et une station de base (10) sans fil et de manière bidirectionnelle par l'intermédiaire d'une première jonction (21, 22) basée sur un couplage de champ distant électromagnétique,
des données sont transmises entre le transpondeur (20) et la station de base (10) sans fil de manière bidirectionnelle par l'intermédiaire d'au moins une deuxième jonction (23, 24) basée sur un couplage inductif,
**caractérisé en ce que :**
la station de base (10) effectue une routine anti-collision par l'intermédiaire de la première jonction (21, 22) et lorsque le transpondeur (20) est choisi, on désactive la première jonction (21, 22) et on effectue une transmission de données uniquement par l'intermédiaire de la deuxième jonction (23, 24).

2. Procédé selon l'une quelconque des revendications précédentes, **caractérisé en ce que** lors de la transmission de données par l'intermédiaire de la deuxième jonction (23, 24), on effectue un processus de codage DES, un processus de codage Triple-DES ou un processus de codage AES.

3. Procédé selon l'une quelconque des revendications **caractérisé en ce que** le transpondeur (20) est alimenté en énergie uniquement par l'intermédiaire de la première jonction (21, 22) et/ou de la deuxième jonction (23, 24).

4. Procédé selon l'une quelconque des revendications précédentes, **caractérisé en ce que** durant la routine anticollision, des données sont transmises de manière basée sur la rétrodiffusion du transpondeur (20) vers la station de base (10) par l'intermédiaire de la première jonction (21, 22).

5. Procédé selon l'une quelconque des revendications précédentes, **caractérisé en ce que** la première jonction (21, 22) fonctionne dans une zone de fréquences de 400 MHz à 6 GHz.

6. Procédé selon l'une quelconque des revendications précédentes, **caractérisé en ce que** la deuxième jonction (23, 24) fonctionne dans une zone de fréquences de 100 kHz à 150 kHz ou de 10 MHz à 20 MHz.

7. Transpondeur comportant les moyens permettant d'effectuer les étapes du procédé selon l'une quelconque des revendications 1 à 6.
